# EUROPEAN PATENT APPLICATION

(11) **EP 1 336 967 A1**
(43) Date of publication of application: **20.08.2003**
(21) Application number: 02090060.1
(22) Date of filing: 15.02.2002
(51) Int. Cl.: G11B 27/034, G11B 27/10

(54) **Method and apparatus for addressing data segments on a recording medium for replay**

(71) Applicant: DEUTSCHE THOMSON-BRANDT GMBH, 78048 Villingen-Schwenningen (DE)
(72) Inventor: Hörentrup, Jobst, 30161 Hannover (DE); Janssen, Uwe, 30926 Seelze (DE); Klausberger, Wolfgang, 30880 Laatzen (DE); Kubsch, Stefan, 31559 Hohnhorst (DE); Ostermann, Ralf, 30167 Hannover (DE)
(74) Representative: Hartnack, Wolfgang, Dipl.-Ing.

(57) **Abstract**

In modern digital video recorders not only the video/audio data stream itself is stored in data packets on the medium but also additional information about the stream. Part of this additional information is navigation information for random access to segments within the recorded material. A playlist is used that includes a sequence of substructure information data carrying start and end time data and addressing mode information for the segments. The substructure information data provide information describing each segment within one recording and where the segment data can be found on the storage medium. Because the playlist level does not include addressing mode information for the segments, segments having any addressing mode can be replayed using a single playlist.

## Description

The invention relates to a method and to an apparatus for addressing data segments on a recording medium for replay, in particular in a DVR recorder.

### Background

In modern digital video recorders, when recording a bitstream to a disc, for instance by optical storage, not only the stream itself is stored in data packets on the medium but also additional information about the stream. Part of this additional information can be navigation information for random access to segments within the recorded material. Such navigation information (addressing data structure) can provide a mapping between some time information and a corresponding data packet within the bitstream.

### Invention

However, depending on the recording device type and on the type of the input bitstream, recordings with different types of navigation information or addressing modes may be allowed even on the same recording medium.
When addressing a certain segment or data packet within a stream, the address data structures are used for converting time information into a physical address within the stream or the recording medium. But as there may be different types of navigation information data structure, upper navigation layers need to apply the correct addressing mode for each recording and recording segment or data packet. An example for such upper navigation layer is the 'playlist' layer. Modern recorders allow the creation of user-defined playlists that can be used for skipping advertisement-content segments when playing back a stream, for example. Another application is grouping together two or more recordings into a single playlist. These playlists represent a layer on top of the recordings and the navigation information. Within such playlist the appropriate, aforementioned addressing mode has to be used for accessing a segment of a recording.
However, state-of-the-art recorders typically define the addressing mode globally within the playlist, which means that only such recordings can be referenced in a playlist that are using the same addressing mode.

A problem to be solved by the invention is to facilitate playlist referencing of recordings that have different addressing modes. This problem is solved by the method disclosed in claim 1. An apparatus that utilises this method is disclosed in claim 4.

The playlist includes a sequence of substructure information data, and other information, but no addressing mode information. The substructure information data provide information describing each segment - e.g. by a its start time and its end time - within one recording and where the segment data can be found on the storage medium, including the addressing mode of the segment. The addressing mode can be embodied by any known data structure within a file.

In principle, the inventive method is suited for addressing data segments on a recording medium for replay, using a playlist data field including substructure data fields that each refer to selected data segments to each of which an addressing mode is assigned, whereby not the playlist data field but the substructure data fields include addressing mode information for the data segments to be selected.

In principle the inventive apparatus facilitates addressing of data segments on a recording medium for replay, using a playlist data field including substructure data fields that each refer to selected data segments, for example by start and end time information for a segment to be selected,
wherein to each substructure data field an addressing mode is assigned, said apparatus including:
- means for receiving a data stream from said recording medium;
- means for buffering said data stream followed by a demultiplexer;
- means for decoding the demultiplexed partial data streams;
- means for entering a playlist;
- means for controlling the replay of said selected data segments according to said playlist and said substructure data fields,
wherein not the playlist data field but the substructure data fields include addressing mode information for the data segments to be selected.

Advantageous additional embodiments of the invention are disclosed in the respective dependent claims.

### Drawings

Exemplary embodiments of the invention are described with reference to the accompanying drawings, which show in:
- Fig. 1: Known playlist-referencing system for recording segments;
- Fig. 2: Inventive playlist referencing system for recording segments;
- Fig. 3: Inventive recorder.

### Exemplary embodiments

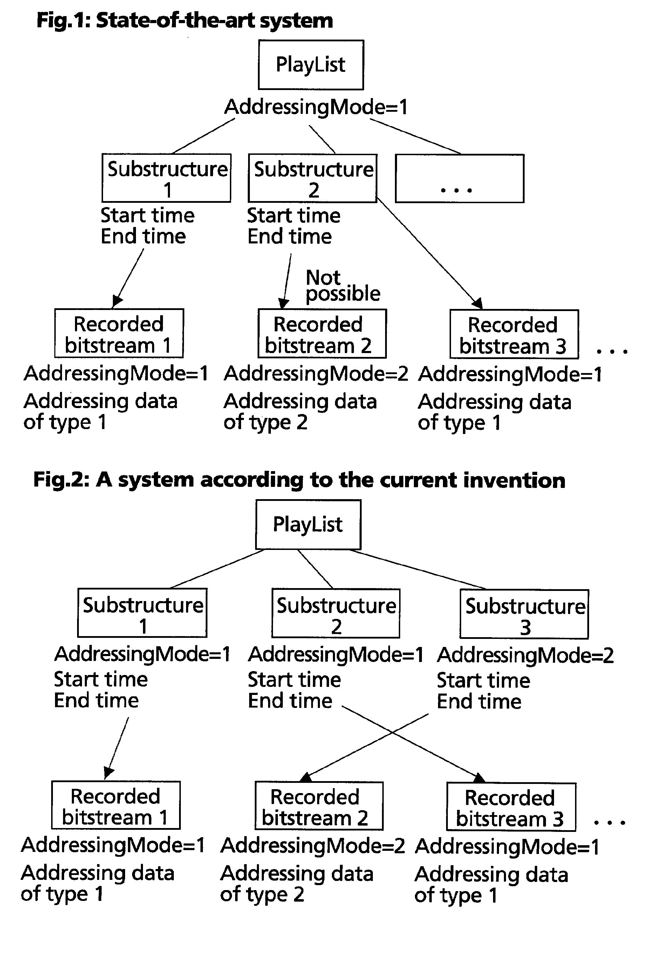

Fig.1 shows a playlist that includes several substructures. The substructures refer to recording segments of the storage medium. The recording segments have different addressing modes, for example 'Mode 1' or 'Mode 2'. In state-of-the-art recorders the addressing mode is globally defined for each playlist, but is not defined in the playlist's substructures. Therefore only segments having a specific addressing mode can be replayed according to the current playlist.

According to the invention, every substructure of a playlist can use its own addressing mode as depicted in Fig. 2. The global addressing mode definition in the level of the playlist data field is removed and replaced by adding addressing mode information data to each substructure data field, whereby each substructure defines and applies its own addressing mode. Thereby it is possible to build playlists referencing any recording on the volume, independent of the addressing mode it uses. Because the playlist level does not include addressing mode information for the segments, segments having any addressing mode can be replayed using a single playlist.

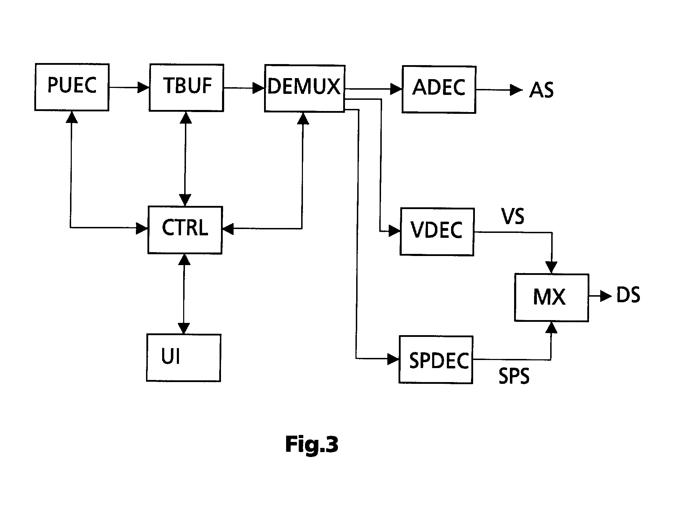

In Fig. 3 the pick-up and error correction unit PUEC receives the input data for the recorder, e.g. a DVR recorder, from a storage medium (not depicted), e.g. an optical disc. The output of PUEC passes through a track buffer TBUF to a demultiplexer DEMUR. According to the type of segment data, the demultiplexer provides the corresponding partial data stream to an audio decoder ADEC providing a decoded audio signal AS, to a video decoder VDEC providing a decoded video signal VS, and to a subpicture decoder SBDEC providing a decoded subpicture signal SPS. A mixer MX combines VS and SPS and outputs a corresponding display signal DS. A user interface UI facilitates user input of a playlist. A controller CTRL controls PUEC, TBUF and DEMUX as required, using the playlist's substructure data so as to address and replay the corresponding recorded data segments, including data segments that have a different address mode.

## Claims

1. Method for addressing data segments on a recording medium for replay, using a playlist data field including substructure data fields that each refer to selected data segments to each of which an addressing mode is assigned, **characterised in that** not the playlist data field but the substructure data fields include addressing mode information for the data segments to be selected.

2. Method according to claim 1, wherein the substructure data fields for said selected data segments additionally include start and end time information for each segment to be selected.

3. Method according to claim 1 or 2, wherein said recording medium is an optical disc and said data segment addressing takes place in a DVR recorder.

4. Apparatus for addressing data segments on a recording medium for replay, using a playlist data field including substructure data fields that each refer to selected data segments, for example by start and end time information for a segment to be selected, wherein to each substructure data field an addressing mode is assigned, said apparatus including:
- means (PUEC) for receiving a data stream form said recording medium;
- means (TBUF) for buffering said data stream followed by a demultiplexer (DEMUX);
- means (ADEC, VDEC, SPDEC) for decoding the demultiplexed partial data streams;
- means (UI) for entering a playlist;
- means (CTRL) for controlling the replay of said selected data segments according to said playlist and said substructure data fields,
wherein not the playlist data field but the substructure data fields include addressing mode information for the data segments to be selected.

5. Apparatus according to claim 4, said apparatus being a DVR recorder.
